# EUROPEAN PATENT APPLICATION

(11) **EP 1 437 751 A1**
(43) Date of publication of application: **14.07.2004**
(21) Application number: 04000014.3
(22) Date of filing: 02.01.2004
(51) Int. Cl.: H01H 1/02

(54) **Electrode for vacuum interrupter, vacuum interrupter using the same and vacuum circuit-breaker**

(30) Priority: 09.01.2003 JP 2003002722; 15.05.2003 JP 2003137094
(71) Applicant: Hitachi, Ltd., Chiyoda-ku, Tokyo 101-8010 (JP)
(72) Inventor: Kikuchi, Shigeru, Hitachi, Ltd., Intell. Prop. Gp., Chiyoda-ku Tokyo 100-8220 (JP); Mashiko, Takashi, Hitachi, Ltd., Intell. Prop. Gp., Chiyoda-ku Tokyo 100-8220 (JP); Kobayashi, Masato, Hitachi, Ltd., Int. Prop. Gp., Chiyoda-ku Tokyo 100-8220 (JP); Tsuchiya, Kenji, Hitachi, Ltd., Intell. Prop. Gp., Chiyoda-ku Tokyo 100-8220 (JP); Baba, Noboru, Hitachi, Ltd., Intell. Prop. Group, Chiyoda-ku Tokyo 100-8220 (JP); Sato, Takashi, Hitachi, Ltd., Intell. Prop. Group, Chiyoda-ku Tokyo 100-8220 (JP); Koguchi, Yoshio, Hitachi, Ltd., Intell. Prop. Gp., Chiyoda-ku Tokyo 100-8220 (JP)
(74) Representative: Strehl Schübel-Hopf & Partner

(57) **Abstract**

An object of the invention is to provide an electrical contact of a low surge type which is easily manufactured, has a small environmental influence, and has a small chopping current value, a manufacturing method of the same, a vacuum interrupter using the same, and a vacuum circuit-breaker using the same. The invention provides an electrical contact having a high conductive metal, and a refractory element constituted by a metal nitrogen or a metal oxide. The high conductive metal can employ Ag or Cu or alloys mainly containing either Ag or Cu, the metal nitride can employ one or mixture of two or more of Mg3N2, AlN, TiN, ZrN, CrN, Cr2N, NbN, BN and Si3N4, and the metal oxide can employ one or mixture of two or more of MgO, Al2O3, TiO2, Ti2O3, ZrO2, ThO2, Cr2O3, Nb2O5, Y2O3 and ZnO. Accordingly, it is possible to secure an improved resistance welding performance.

## Description

### BACKGROUND OF THE INVENTION

### FIELD OF THE INVENTION

The present invention relates to an electrode for a vacuum interrupter, and also relates to a vacuum interrupter using the same, a vacuum circuit-breaker and a switchgear for a pad mount transformer.

### DESCRIPTION OF THE PRIOR ART

As one of requirements for an electrode of a vacuum interrupter used in a vacuum circuit-breaker, there can be listed up a matter that a chopping current is small. This is because there is a risk that an unusual surge voltage is generated and an electric breakdown of a load equipment or the like is generated in the case of employing the vacuum interrupter in an inductive circuit and shutting off the current. Accordingly, in order to inhibit the unusual surge voltage, it is necessary to make the chopping current small.

As an art relating to a low surge electrode having a small chopping current, there are listed up, for example, a Co-Ag-Se electrode, a Co-Ag-Te electrode and the like (refer to patent document 1 mentioned below).

### Patent Document 1

### JP-A-9-171746

However, the Co-Ag-Se electrode is expensive because of using Ag, and is taken a dim view of an environmental influence because of using a low melting point metal Se. Accordingly, it is desired to develop a low surge electrode for a vacuum circuit-breaker which is inexpensive and environmentally friendly.

Further, it is somewhat hard to manufacture the electrode mentioned above. Therefore, it is desired to develop a low surge electrode for a vacuum circuit-breaker which is easily manufactured.

### SUMMARY OF THE INVENTION

As mentioned above, an object of the present invention is to provide a low surge electrode solving the problems mentioned above, a vacuum interrupter using the same, a vacuum circuit-breaker and a switchgear for a pad mount transformer.

As one means for solving the problem, there is provided an electrode for a vacuum interrupter having an electrical contact member constituted by a high conductive metal, an active metal and a refractory element, and an electrode rod, characterized in that the refractory element is constituted by an oxide or a nitride of a metal having the same component as the active metal.

The metal oxide or the metal nitride corresponding to the refractory element is decomposed by an arc heat at a time of shutting off the current, and it is possible to make the chopping current small by an oxygen gas or a nitrogen gas generated together with the decomposition.

In particular, it is preferable to contain an active metal of the same component as the base metal of the metal oxide or the metal nitride, and contain a plurality of the same metals with respect to a plurality of metal oxides or metal nitrides.

In the case that the active metal and the metal constituting the refractory element are made the same, it is possible to adsorb the oxygen or the nitrogen which is generated by the decomposition of the oxide or the nitride at a time of interrupting the current so as to maintain a vacuum condition within the vacuum interrupter and secure a high voltage resistance after the interruption, so that it is possible to obtain the electrode for the vacuum interrupter of the low surge type, the vacuum interrupter using the electrode, and the vacuum circuit-breaker.

It is possible to employ Ag or Cu or alloys mainly containing either Ag or Cu as a high conductive metal, and it is possible to secure an improved resistance welding performance.

It is preferable that the refractory element is between 5 and 25 weight %. In the case that the refractory element is less than 5 weight %, the high voltage resistance and a welding resistance come short, and in the case that the refractory element is more than 25 weight %, an electric conductivity is lowered, and an interrupting performance is lowered due to an excessive oxygen content or nitrogen content.

It is desirable that the metal oxide or the metal nitride forming the refractory element is constituted by one or more mixture of Mg3N2, AlN, TiN, ZrN, CrN, Cr2N, NbN, BN, and Si3N4, MgO, Al2O3, TiO2, Ti2O3, ZrO2, ThO2, Cr2O3, Nb2O5, Y2O3 and ZnO.

Among the elements mentioned above, Al, Ti, Zr, Cr, Nb and B are desirable as the metal component in view of the property mentioned above. It is possible to obtain the low surge type electrode which is easily manufactured and is environmentally friendly, by using the metal oxide and the metal nitride.

It is preferable that the active metal is constituted by a metal having a high affinity to the oxygen gas and the nitrogen gas combining the gaseous oxygen and nitrogen which are generated together with the decomposition of the metal nitrogen, and it is desirable that the active metal is the same metal as the base metal of the metal oxide or the metal nitride. For example, there is preferably employed a combination that the active metal is constituted by Ti in the case that the metal nitride is TiN, the active metal is constituted by Mg in the case that the metal nitride is Mg3N2, and the active metal is constituted by Al in the case that the metal nitride is AlN.

If the active metal is different from the metal constituting the metal oxide or the metal nitride, a slight deterioration is generated in a balance between an effect of lowering the chopping current caused by the decomposition of the oxide and the nitride at a time of repeating the current interruption, and an effect of securing the high voltage resistance caused by the adsorption of the oxygen and the nitrogen after the interruption, so that it is hard to obtain a desired performance.

It is preferable that the active metal is set between 2 and 25 weight part per 100 weight part of the refractory element. If the active metal is less than 2 weight part per 100 weight part of the refractory element, it is hard to securely adsorb the gas generated together with the decomposition of the oxide or the nitride at a time of interrupting the current, so that the high voltage performance is lowered after the interruption. If the active metal is more than 25 weight part, the effect of reducing the chopping current caused by the decomposition of the oxide or the nitride is lowered, and a reaction and a diffusion solution are generated between the active metal and a matrix of the high conductive metal in a heating step in the manufacturing process, so that there is a risk that troubles are generated such that a chemical compound is generated, a conductivity and a melting point are lowered, and the like.

In accordance with the present invention, there is provided an electrical contact having a high conductive metal powder, and a powder constituted by a refractory element, and manufactured by heating and sintering a mixed powder obtained by adding an active metal powder to the high conductive metal powder and the refractory element powder at a temperature equal to or less than a melting point of the high conductive metal, after pressure molding.

In this case, it is preferable that the electrical contact of the electrode for the vacuum interrupter is provided with a disc-like center hole in a center of the disc, and a spiral type slit groove having a curved shape for moving a generated arc, and has a vane separated shape.

The slit groove can be obtained easily for a short time by filling a raw material powder constituting the electrical contact to a metal mold which can form the slit groove and form the vane shape and pressure molding.

The center hole is provided so as to prevent the arc generated at a time of interrupting the current from being generated in the center of the electrode. Further, the electronic contact can be obtained while keeping the vane shape having the slit groove mentioned above, by sintering the vane-shaped molded body obtained in accordance with the pressure molding at a temperature equal to or less than a melting point of the high conductive metal corresponding to the constituting component.

Accordingly, it is not necessary to groove in accordance with a machine work after sintering, and it is possible to widely shorten a working time.

It is preferable that grain diameters of the powder constituted by the refractory element and the powder constituted by the active metal are equal to or less than 20 µm.

Further, it is preferably to set a size of the powder constituted by the refractory element between 3 and 15 µm, and set a size of the powder constituted by the active metal between 0.5 and 5 µm smaller than the powder constituted by the refractory element. Further, it is preferable that a grain diameter of the powder constituted by the high conductive metal is equal to or less than 60 µm, and is larger than the powder largely constituted by the refractory element.

The surface of the electric contact is formed as a homogenous micro structure by using the raw material powder having the grain diameter mentioned above, it is possible to obtain a stable interrupting performance, high voltage resistance, high welding resistance and low surge performance having a small dispersion, a contraction coefficient of the molded body is increased, and it is possible to obtain a precise and sound electronic contact.

In the case that a flow property of the raw material powder is worse and it is hard to fill in the mold, it possible to make a granular shape by adding a suitable binder and granulating in accordance with a spray dry method or the like.

It is preferable to set a pressure at a time of pressure molding between 120 and 500 MPa, and set a relative density between 65 and 75 %. If the molding pressure is smaller than this, the molding density is small and the molded body tends to crumble. If the molding pressure is larger than this, the molded body and the metal mold tend to adhere to each other, so that a service life of the metal mold is lowered and a productivity is lowered.

It is preferable that the heating and sintering is achieved by regulating the pressure in the pressure molding and the heating time in the sintering in such a manner that the relative density after heating and sintering at a temperature 20 to 40°C lower than the melting point of the high conductive metal under the high vacuum condition equal to or less than 10⁻² Pa is equal to or more than 92 %.

In accordance with the present invention, there is provided an electrode for a vacuum interrupter having a disc-like electrical contact, a reinforcing member integrally bonded to an opposite surface to an arc generating surface in the electrical contact, and an electrode rod bonded to the reinforcing member, characterized in that the electrical contact is constituted by the electrical contact as described above.

It is preferable that the disc-like electrical contact and the reinforcing member have a center hole in a center of the arc generating surface, the electrode rod is inserted to the center hole so as to be bonded to the reinforcing member, and a surface of the electrode rod close to an arc generation is formed lower than the arm generating surface, and that the electrode rod has a small-diameter portion in which a diameter of a portion bonded to the reinforcing member is smaller than a diameter of a portion connected to an external portion.

In accordance with the present invention, there is provided a vacuum interrupter provided with a pair of fixed side electrode and movable side electrode within a vacuum container, wherein the electrode in accordance with the present invention mentioned above is employed for at least one of the fixed side electrode and the movable side electrode.

Further, in accordance with the present invention, there is provided a vacuum circuit-breaker provided with the vacuum interrupter mentioned above, a conductor terminal connecting each of the fixed side electrode and the movable side electrode within the vacuum container to an outer side of the vacuum interrupter, and an opening and closing means driving the movable side electrode.

In accordance with the present invention, there is provided a switchgear for a pad mount transformer, characterized in that the switchgear has an outer vacuum container, a plurality of vacuum interrupters including a fixed side electrode and a movable side electrode provided within the vacuum container, a flexible conductor electrically connecting a plurality of vacuum interrupters to each other, an insulation tube fixing the fixed side electrode to the outer vacuum c in an insulative manner, and a bellows movably fixing the movable electrode to the outer vacuum container, and it is preferable that the vacuum interrupter is constituted by the vacuum interrupter as mentioned above.

Other objects, features and advantages of the invention will become apparent from the following description of the embodiments of the invention taken in conjunction with the accompanying drawings.

### BRIEF DESCRIPTION OF THE DRAWINGS

Figs. 1A and 1B are respectively a plan view and a cross sectional view showing a structure of an electrode for a vacuum interrupter in accordance with the present invention;
Fig. 2 is a cross sectional view showing a structure of a vacuum interrupter in accordance with the present invention;
Fig. 3 is a cross sectional view showing a structure of a vacuum circuit-breaker in accordance with the present invention; and
Fig. 4 is a cross sectional view showing a structure of a switchgear for a pad mount transformer in accordance with the present invention.

### DESCRIPTION OF THE PREFERRED EMBODIMENT

A description will be given below of a mode in accordance with the present invention by employing an embodiment.

### Electrode Preparation (Embodiment 1)

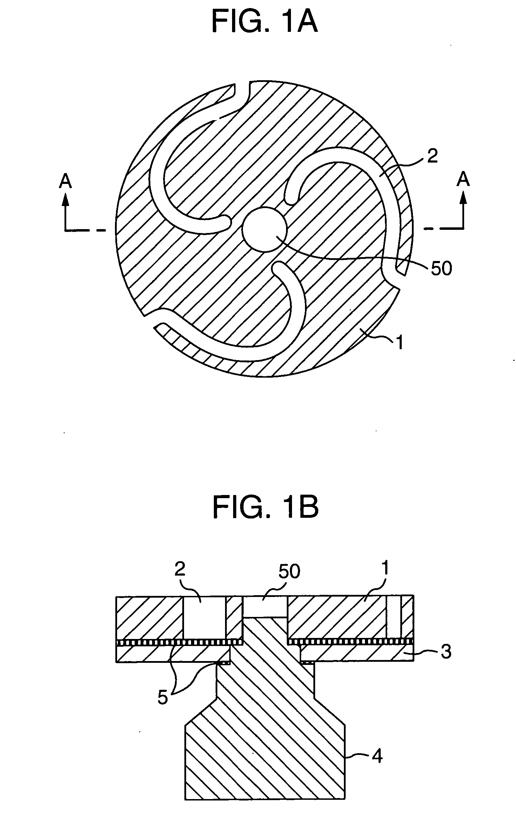

Figs. 1A and 1B are respectively a plan view and a cross sectional view showing a structure of an electrode prepared in accordance with the present embodiment. Fig. 1A is a plan view of an electrode in a side of an electrical contact, and Fig. 1B is a cross sectional view cut along a line A-A in Fig. 1A.

As shown in Figs. 1A and 1B, the electrode has a flat disc-like electrical contact 1, a center hole 50 preventing an arc from being generated, a spiral groove 2 penetrating the electrical contact 1 for applying a driving force to the arc so as to prevent the arc from being delayed, a reinforcing plate 3, an electrode rod 4 and a brazing material 5.

The electrical contact 1 can be formed in an inclined shape in which opposing contact surfaces are made thinner in an outer peripheral side of the circle than a center portion, and can be formed with no spiral groove 2.

The electrode in accordance with the present embodiment has an electrical contact in which a high conductive metal is Cu, a refractory element is TiN and an active metal is Ti.

The electrical contact 1 is manufactured by the following method.

An average grain diameter of the employed raw material powder is about 10 µm in the refractory element TiN, about 2 µm in the active metal Ti, Si and Cr, and 60 µm or less in the high conductive metal Cu. A composition thereof is constituted by 2 to 35 weight % of TiN, 0.04 to 3.25 weight % of Ti which is changed step by step in this range, and the remaining weight % of Cu, and thirteen kinds of electrical contacts are manufactured.

The electrical contact in accordance with the present invention is formed by first mixing each of TiN, Ti and Cu powders so as to obtain a desired composition. Next, the mixed powder is filled in a metal mold which can form the spiral groove 2 and the center hole 50 and can form a desired electronic contact shape, and a pressure molding is executed by a hydraulic press under a pressure of 250 MPa. The relative densities of the molded bodies are all about 70 %. A flat disc-shaped electrical contact 1 is manufactured in accordance with the sintering operation which is executed by heating the molded product in a vacuum condition of 6.7 x 10⁻³ Pa for 1050°C x 2 hour. The relative densities of the obtained electrical contacts 1 are all 92 to 97 %.

In this case, three or four spiral grooves 2 are provided, and each of the spiral grooves is a penetrating groove which is not in contact with the center hole 50 and tunnels to an outer peripheral portion, and is formed symmetrically.

Further, a metal oxide TiO2 is employed as the refractory element of the electrical contact 1 in place of the metal nitride mentioned above, and eleven kinds of electrical contacts are prepared in the same manner.

Further, for comparison, an electrical contact of 40 weight % Cr-Cu corresponding to an electrode member for a general vacuum interrupter and an electrical contact of Co-43 weight % (Ag-10 weight % Te) corresponding to one of the conventional surge type electrode members are manufactured in the same manner by using the mixed powder of the metal powder of each of the elements.

A manufacturing method of the electrode is as follows. The electrode for the vacuum interrupter shown in Fig. 1B is manufactured by previously machining the electrode rod 4 and the reinforcing plate 3 respectively using an oxygen free copper and an austenitic stainless steel SUS 304, inserting a convex portion of the electrode rod 4 into the center hole 50 formed in the electrical contact 1 mentioned above and a center hole which is provided in the reinforcing plate 3 and is larger than a diameter of the center hole 50, fitting via the BAg-8 brazing material 5, mounting the brazing material 5 between the electrical contact 1 and the reinforcing plate 3 and between the reinforcing plate 3 and the electrode bar 4 as shown in Figs. 1A and 1B, and brazing them by heating in the vacuum condition of 8.2 x 10⁻⁴ Pa or less for 980°C x 8 minute.

This electrode is an electrode which is used for the vacuum interrupter for a rated voltage 7.2 kV, a rated current 600 A and a rated interrupting current 20 kA.

In this case, if the strength of the electrical contact 1 is sufficient, the reinforcing plate 3 may be omitted.

Further, as shown in Fig. 1B, the electrode rod 4 has a small-diameter portion in which a diameter close to a bonded portion to the reinforcing plate 3 is smaller than a diameter of a portion connected to an external terminal. A corner portion of the arc generating surface is formed in a flat shape, however, it is preferable to form in a circular arc shape.

In the present embodiment, the electrode for the vacuum interrupter can be used as it is sintered, by applying a conditioning treatment of incorporating in a virtual vacuum interrupter and generating an arc, and smoothening surfaces contact with each other.

Next, in the case of the Ti oxide, the same electrode as that shown in Figs. 1A and 1B is prepared in accordance with the same method as that of the embodiment 1.

The high conductive metal Cu, the active metal Ti and the refractory element TiO2 are mixed on the basis of a composition ratio in Nos. 21 to 31 of Table 2.

A grain diameter of Cu is equal to or less than 60 µm, and grain diameters of the active metal and the refractory element are about 2 µm. A relative density of the pressure molded body is about 71 % in each of Nos. 21 to 31 mentioned above, and the relative density of the obtained electrical contact member 1 is between 93 and 96 % in each of Nos. 21 to 31.

As the refractory element of the electrical contact 1, it is possible to employ at least one metal nitrogen in Mg3N2, AlN, ZrN, CrN, Cr2N, NbN, BN and Si3N4, in the same manner as TiN. It is preferable that the active metal at this time employs the metal constituting the nitride thereof. In this case, it is possible to manufacture the electrode in the same manner mentioned above. Further, in the case that the high conductive metal of the electronic contact 1 is Ag, the electrode can be manufactured in the same manner.

Further, as the refractory element of the electrical contact 1, the metal oxide can be employed in place of the metal nitride mentioned above. Even in the case that the refractory element is constituted by any one or two or more mixture of the oxides TiO2, MgO, Al2O3, Ti2O3, ZrO2, ThO2, Cr2O3, Nb2O5, Y2O3 and ZnO, and the active metal is constituted by the metal forming the respective oxides, the same electrode can be manufactured.

### (Embodiment 2)

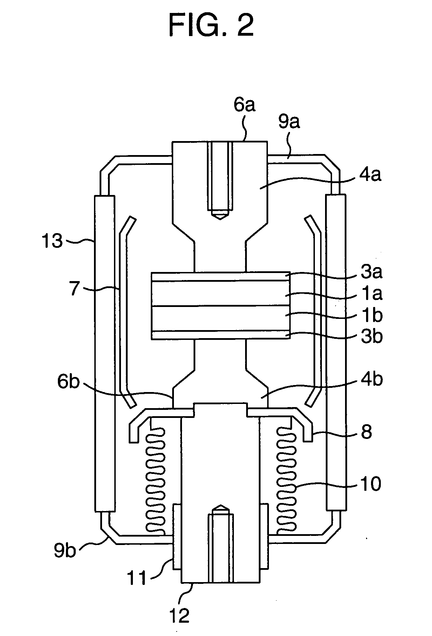

Fig. 2 is a cross sectional view showing a structure of a vacuum interrupter in accordance with the present embodiment. As shown in Fig. 2, a fixed side electrode 6a is structured by a fixed side electrical contact 1a, a reinforcing plate 3a and a fixed side electrode rod 4a, and a movable side electrode 6b is structured by a movable side electrical contact 1b, a reinforcing plate 3b and a movable side electrode rod 4b, respectively. The movable side electrode 6b is bonded by brazing to a movable side holder 12 via a movable side shield 8 of SUS 304 for preventing a metal vapor or the like from scattering at a time of interruption. They are brazed and sealed in high vacuum by a fixed side end plate 9a, a movable side end plate 9b and an insulating tube 13, and are connected to an external conductor by the fixed side electrode 6a and a threaded portion of the movable side holder 12. An annular shield 7 of SUS 304 preventing the metal vapor from scattering at a time of interruption is provided on an inner surface of the insulating tube 13, and a guide 11 for supporting a sliding portion is provided between the movable side end plate 9b and the movable side holder 12. A metal bellows 10 is hermetically bonded to a portion between the cap-shaped movable side shield 8 and the movable side end plate 9b, whereby it is possible to open and close the fixed side electrode 6a and the movable side electrode 6b by vertically the movable side holder 12 in a state of keeping an inner side of the vacuum interrupter in a vacuum state.

In the present embodiment, the vacuum interrupter having a specification of a rated voltage 7.2 kV, a rated current 600 A and a rated interrupting current 20 kA and having a structure shown in Fig. 2 is manufactured by using the electrodes 6a and 6b shown in Fig. 1 and having the electrical contacts 1a and 1b manufactured in the embodiment 1.

The vacuum interrupter mentioned above is inexpensive, has a less environmental influence, has a smaller chopping current value in comparison with the general vacuum interrupter, and has an improved high voltage resistance.

### (Embodiment 3)

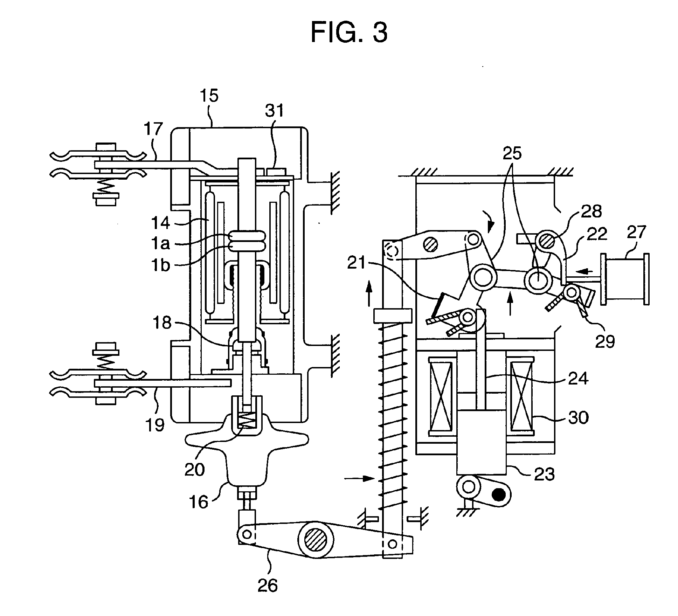

Fig. 3 is a view of a structure of a vacuum circuit-breaker showing a vacuum interrupter and an operating mechanism thereof in accordance with the present. In the present embodiment, the vacuum interrupter manufactured in the embodiment 2 is mounted as the vacuum interrupter.

The vacuum circuit-breaker is structured such that an operating mechanism portion is arranged in a front surface, and three sets of three-phase batch type epoxy resin tubes 15 supporting a vacuum interrupter 14 are arranged in a back surface. The vacuum interrupter 14 is opened and closed by the operating mechanism via an insulating operating rod 16.

In the case that the circuit-breaker is in a closed circuit state, the current flows through an upper terminal 17, the electrical contact 1, a collector ring 18 and a lower terminal 19. A contact force between the electrodes is kept by a contact spring 20 attached to the insulating operating rod 16. The contact force between the electrodes and an electromagnetic force caused by a short circuit current are kept by a supporting lever 21 and a prop 22. When energizing a closing coil 30, a plunger 23 pushes up a roller 25 via a knocking rod 24 from an open circuit state, rotates a main lever 26 so as to close between the electrodes, and thereafter holds by the supporting lever 21.

In the case that the circuit-breaker is in a trip-free state, a tripping coil 27 is energized, a tripping lever 28 disconnects an engagement of the prop 22, and the main lever 26 is rotated so as to open between the electrodes. In the case that the circuit-breaker is in a closed circuit state, the electrodes are opened therebetween, thereafter, the link is returned by a reset spring 29, and the prop 22 is simultaneously engaged. When energizing the closing coil 30 in this state, the closed circuit state is formed. Reference numeral 31 denotes an exhaust tube.

The vacuum interrupter mentioned above mounts the vacuum interrupter which is inexpensive, has a less environmental influence, has a smaller chopping current value in comparison with the general vacuum interrupter, and has an improved high voltage resistance, thereon.

### (Embodiment 4)

In the present embodiment, the electrode manufactured by using the electrical contact constituted by the metal nitride or the metal oxide and the active metal in accordance with the present invention obtained in the embodiment 1 is mounted on the vacuum interrupter having the rated voltage 7.2 kV, the rated current 600 A and the rated interrupting current 20 kA shown in the embodiment 2 and is incorporated in the vacuum circuit-breaker shown in the embodiment 3. An interrupting test is applied to the incorporated structure and a chopping current is measured.

Tables 1 and 2 show results of the interrupting test. In this case, with respect to the interrupting performance and the high voltage resistance, the electrical contacts in Nos. 1 and 21 in the respective tables are set to 1.

As a comparative material, there are manufactured a 40 weight % Cr-Cu electrical contact (No. 14) corresponding to an electrode material for a general vacuum interrupter, a Co-43 weight % (Ag-10 weight % Te) electrical contact (No. 15) corresponding to one of the conventional low surge type electrode materials, a contact member (Nos. 12, 13, 30 and 31) in which the active metal is different from the metal constituting the oxide, and they are estimated.

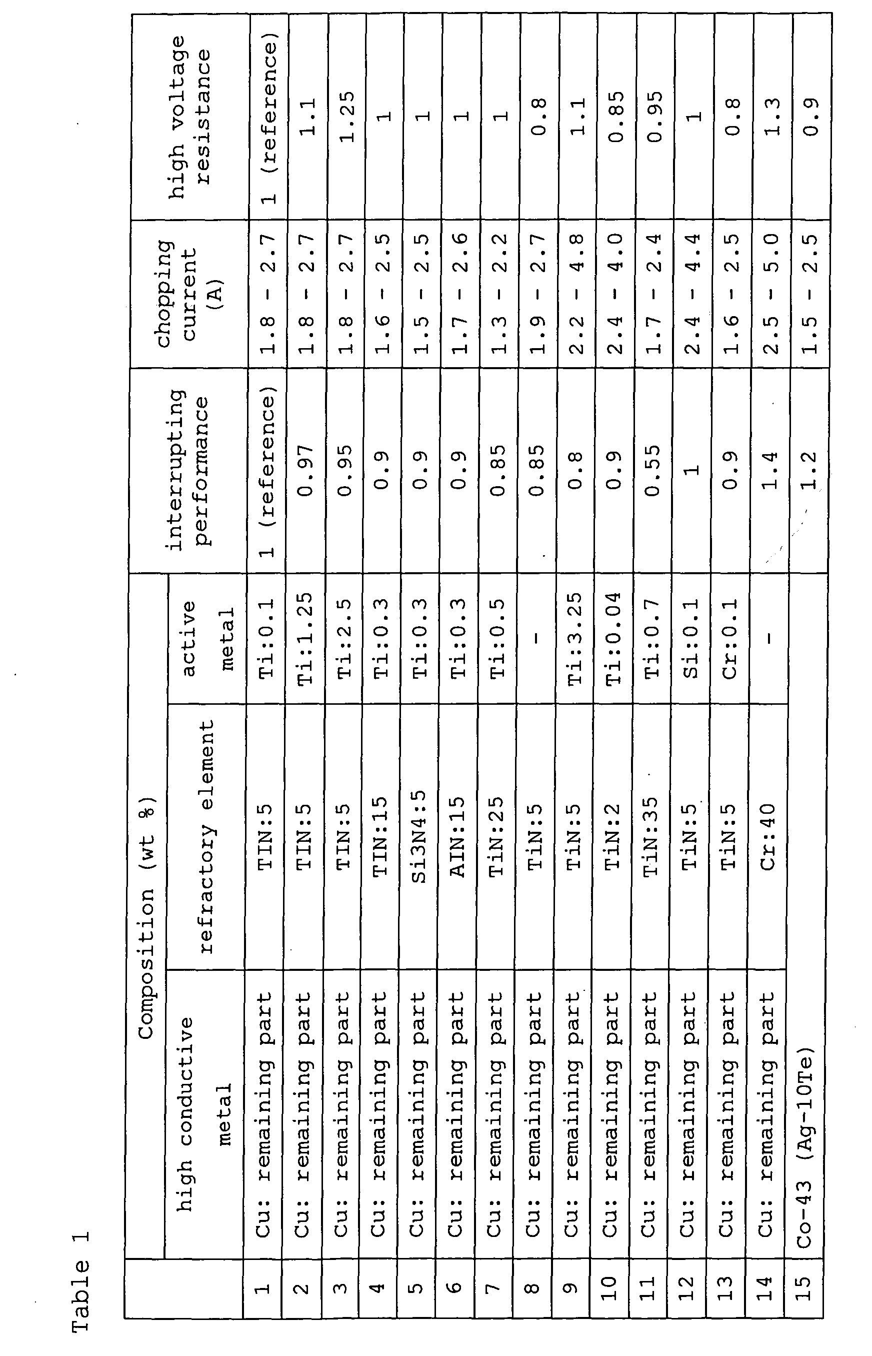

In the 40 weight % Cr-Cu electrical contact No. 14 corresponding to the electrode material for the general vacuum interrupter, the chopping current value is between 2.5 and 5.0 A, and in the Co-43 weight % (Ag-10 weight % Te) electrical contact No. 15 corresponding to one of the low surge type electrode materials, the chopping current value is between 1.5 and 2.5 A.

On the contrary, in all of the electrical contacts Nos. 1 to 7 in accordance with the present invention, the chopping current value is slightly larger than the Co-43 weight % (Ag-10 weight % Te) electrical contact No. 15 corresponding to the low surge type electrode material, however, the same or less chopping current value is partially indicated.

Further, there is a tendency that the chopping current value is smaller than the 40 weight % Cr-Cu electrical contact No. 14.

Further, in the present invention, in Nos. 2 and 3 having much content of the active metal and Nos. 4 to 7 having much content of the refractory element, the interrupting performance is slightly lowered, however, this lowering is practically in a range without trouble.

In the case that an amount of the refractory element containing the nitrogen is set to 100, No. 8 in which the active metal is less than 2 in the weight ratio is hard to securely adsorb the nitrogen generated due to the decomposition of the nitride at a time of interrupting the current, whereby the high voltage resistance after interruption is slightly lowered. On the other hand, in No. 9 in which the active metal is equal to or more than 50 in the weight ratio with respect to the refractory element 100 containing the nitrogen, the effect of making the chupping current value caused by the decomposition of the nitride is lowered, Ti is solidified to Cu, and the interrupting performance is slightly lowered due to the lowering of the resistance welding performance.

Further, in No. 10 in which the refractory element containing the nitrogen is 2 weight %, the high voltage resistance comes short, and in No. 11 having 35 weight %, the interrupting performance is lowered because of an excessive contained nitrogen amount by the refractory element.

Nos. 12 and 13 having the metal which is different from the metal constituting the refractory element, as the active metal are weak in the effect of lowering the chopping current value due to the decomposition of the nitride, and the effect of securing the high voltage resistance due to the nitrogen adsorption after interruption.

Since the present embodiment does not have the conventional component which has the large environmental influence, the present embodiment has an extremely small environmental influence. Further, since such a component is not provided, it is easy to manufacture the structure.

Further, since a predetermined performance is achieved without using Ag or the like, a cost can be reduced.

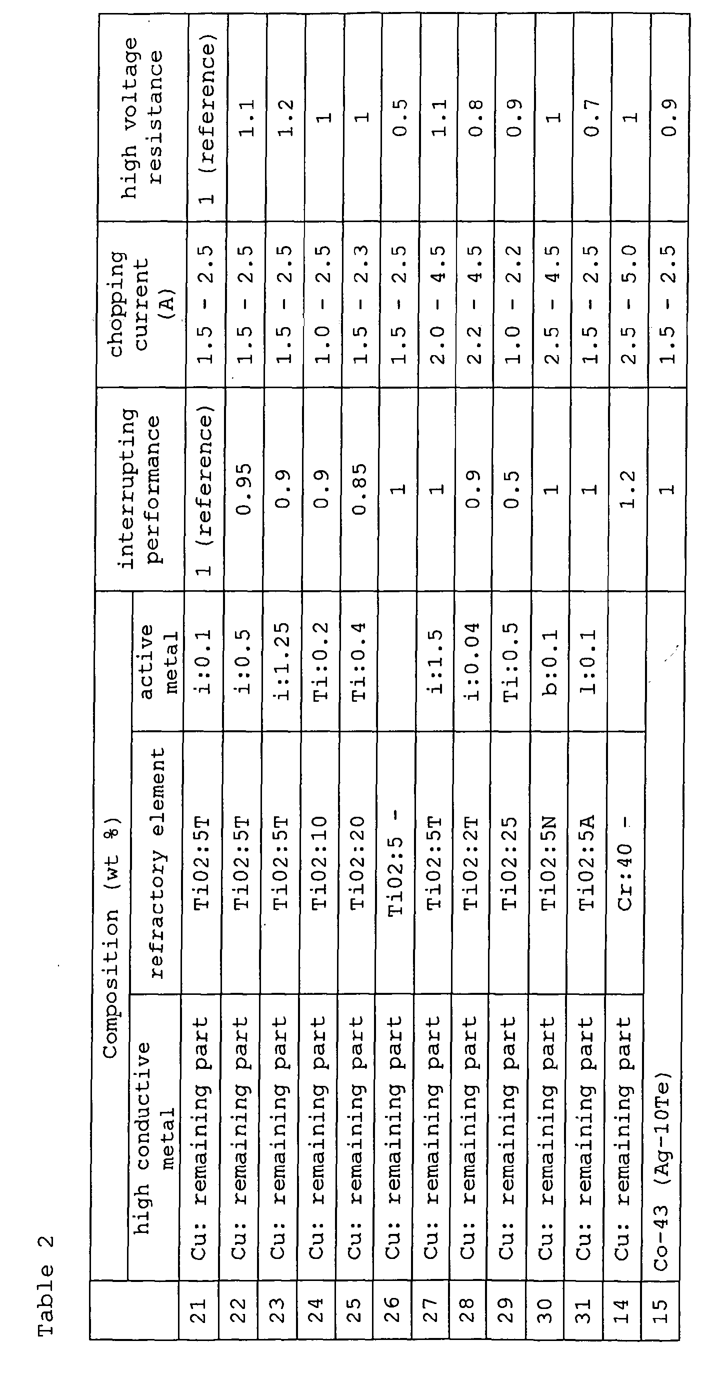

Table 2 shows results of an interrupting test using the metal oxide.

In all of Nos. 21 to 26 using the metal nitride as the refractory element, there is indicated the same or less chopping current value as that of the Co-43 (Ag-10Te) contact member No. 15 corresponding to the low surge type electrode material.

In the case that the refractory element containing the oxygen is set to 100, in No. 27 in which the active metal is larger than 25 in the weight ratio, the effect of reducing the chopping current value caused by the decomposition of the oxide is lowered.

Accordingly, in the case that the refractory element containing the oxygen is set to 100, it is useful to set the active metal to a range between 100 : 2 and 100 : 25 in the weight ratio.

Further, in No. 28 in which the refractory element containing the oxygen is less than 5 weight %, the high voltage resistance after interruption is slightly lowered. In No. 29 in which the refractory element is more than 20 weight %, the effect of reducing the chopping current value caused by the decomposition of the oxide is lowered, Ti is solidified to Cu, and the interrupting performance is slightly lowered due to the lowering of the resistance welding performance.

Accordingly, it is useful to set the refractory element in the case of the metal oxide to 5 to 20 weight % with respect to the weight of the electrode contact member.

As mentioned above, it is given proof that the electrode having the electrical contact in accordance with the present invention has the smaller chopping current value in comparison with the electrode material for the general vacuum valve, and has the same low surge performance as that of the conventional low surge type electrode. Here, in the case that the high conductive metal is constituted by Ag, and in the case that the refractory element is constituted by Mg3N2, ZrN, CrN, Cr2N, NbN and BN, and TiO2, MgO, Al2O3, Ti2O3, ZrO2, ThO2, Cr2O3, Nb2O5, Y2O3 and ZnO, the same effect can be obtained.

### (Embodiment 5)

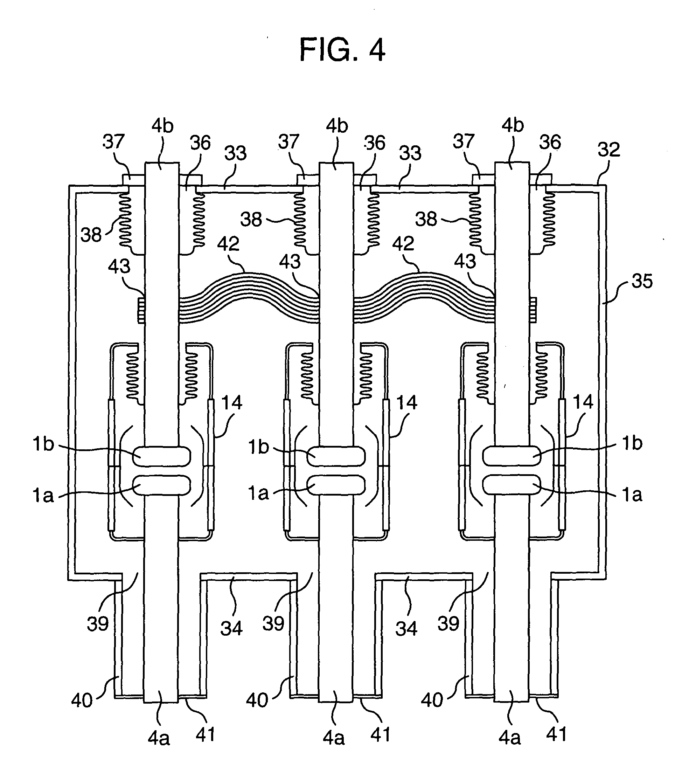

Fig. 4 shows a vacuum switchgear for a pad mount transformer in which the electrode obtained by the embodiment 1 is mounted on the vacuum interrupter of the embodiment 2. The present switchgear is structured such that a plural pairs of vacuum interrupters 14 corresponding to a main circuit switch are vacuum sealed within an outer vacuum container 32. The outer vacuum container 32 is provided an upper plate member 33, a lower plate member 34 and a side plate member 35 which are all made of stainless steel, is structured such that peripheral portions (edges) of the respective plate members are bonded to each other in accordance with a welding, and is placed together with the equipment main body.

Upper through holes 36 are formed in the upper plate member 33, and an annular insulating upper base 37 is fixed to an edge of each of the upper through holes 36 so as to cover each of the upper through holes 36. The columnar movable side electrode rod 4b is inserted to a circular space portion formed in a center of each of the upper bases 37 so as to freely reciprocate (move vertically). Each of the upper through holes 36 is closed by the upper base 37 and the movable side electrode rod 4b.

An axial end portion (an upper side) of the movable side electrode rod 4b is structured such as to be connected to an operating device (an electromagnetic operating device) placed in an outer portion of the outer vacuum container 32. Further, an outer bellows 38 is arranged in a lower side of the upper plate member 33 so as to freely reciprocate (move vertically) along an edge of each of the upper through holes 36, one end side in an axial direction of each of the outer bellows 38 is fixed to a lower side of the upper plate member 33, and another end side in the axial direction thereof is attached to an outer peripheral surface of each of the movable side electrode rods 4b. In other words, in order to form the outer vacuum container 32 in a sealed structure, the outer bellows 38 is arranged in the edge of each of the upper through holes 36 along the axial direction of each of the movable side electrode rods 4b. Further, an exhaust pipe (not shown) is connected to the upper plate member 33, and an inner side of the outer vacuum chamber 32 is vacuum exhausted via the exhaust pipe.

On the other hand, a lower through hole 39 is formed in the lower plate member 34, and an insulating bushing 40 is fixed to the lower plate member 34 in an edge of each of the lower through holes 39 so as to cover each of the lower through holes 39. An annular insulating lower base 41 is fixed to a bottom portion of each of the insulating bushings 40. Further, the columnar fixed side electrode rod 4a is inserted to a center circular space portion in each of the lower bases 41. In other words, the lower through hole 39 formed in the lower plate member 34 is closed by the insulating bushing 40, the lower base 41 and the fixed side electrode 4a. Further, one end side (a lower side) of the fixed side electrode rod 4a in the axial direction is connected to a cable (a distribution line) arranged in an outer portion of the outer vacuum container 32. All of the insulating members employ a sintered body of an alumina, a zirconia or the like.

The vacuum interrupter 14 corresponding to the main circuit switch portion of the switchgear is received in an inner portion of the outer vacuum chamber 32, and the movable side electrode rods 4b are connected to each other via a flexible conductor 42 having two curved portions. The flexible conductor 42 is structured by alternately laminating a plurality of copper plates and stainless plates corresponding to a conductive plate material having two curved portions in the axial direction. A through hole 43 is formed in the flexible conductor 42, and the conductive plate materials are connected to each other by inserting each of the movable side electrode rods 4b to each of the through holes 43.

As mentioned above, the vacuum interrupter manufactured by employing the electrode manufactured in the embodiment 1 in the embodiment 2 can be applied to the switchgear for the pad mount transformer, and can obtain the effect of the small chopping current and the same low surge performance as that of the conventional low surge type electrode, in the same manner as the embodiment 4. Further, the environmental influence is extremely small, and it is easy to manufacture the structure. Further, it is possible to apply to various vacuum switch apparatuses such as a vacuum insulating switch gear and the like.

As mentioned above, in accordance with the present invention, it is possible to provide the electrical contact which has the small chopping current and is excellent in the low surge performance, the manufacturing method of the same, the vacuum interrupter using the same, and the vacuum circuit-breaker using the same.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An electrical contact having a high conductive metal, a refractory element made of a metal nitride or a metal oxide, and an active metal, **characterized in that** said active metal is the same metal as said refractory element.

2. An electrical contact as claimed in claim 1, **characterized in that** the refractory element includes MgO, Al2O3, TiO2, Ti2O3, ZrO2, ThO2, Cr2O3, Nb2O5, Y203, ZnO, Mg3N2, AlN, TiN, ZrN, CrN, Cr2N, NbN, BN and Si3N4.

3. An electrical contact as claimed in claim 1, **characterized in that** said refractory element is contained at 5 to 25 weight %.

4. An electrical contact as claimed in claim 1, **characterized in that** said refractory element is a metal oxide, and said refractory element is contained at 5 to 20 weight %.

5. An electrical contact as claimed in claim 1, **characterized in that** said high conductive metal is an alloy mainly constituted by Cu.

6. An electrical contact as claimed in claim 1, **characterized in that** electrical contact has a center hole having a disc shape and formed in a center of said disc shape, and a plurality of penetrating grooves formed so as to be connected to an outer peripheral portion of the center hole from a center portion of the hole in non-contact with said center hole.

7. An electrical contact as claimed in claim 1, **characterized in that** a weight ratio between said refractory element and said active metal in said electrical contact member is in a range between 100 : 2 and 100 : 25.

8. An electrical contact as claimed in claim 1, **characterized in that** said refractory element is a metal oxide, and a weight ratio between said refractory element and said active metal in said electrical contact member is in a range between 100 : 2 and 100 : 20.

9. A method of manufacturing an electrical contact **characterized by** a step of heating and sintering a mixed powder having a high conductive metal powder, an active metal powder, and a refractory element powder made of a metal oxide of a metal nitride constituted by the same metal as the active metal at a temperature equal to or less than a melting point of said high conductive metal, after pressure molding.

10. A method of manufacturing an electrical contact as claimed in claim 9, **characterized in that** a grain diameter of said refractory element powder and said active metal powder is equal to or less than 20 µ m, and a grain diameter of said high conductive metal powder is equal to or less than 60 µm.

11. A method of manufacturing an electrical contact as claimed in claim 9, **characterized in that** said refractory element is constituted by a metal oxide, a grain diameter of the high conductive metal powder is equal to or less than 60 µm, and a grain diameter of the refractory element is equal to or less than 10 µm.

12. A method of manufacturing an electrical contact as claimed in claim 9, **characterized in that** a pressure in said pressure molding is adjusted such that a relative density obtained by said pressure molding is between 65 and 75 %, and a heating temperature and a heating time in said sintering are adjusted such that a relative density after being sintered is equal to or more than 92 %.

13. A method of manufacturing an electrical contact as claimed in claim 9, **characterized in that** said pressure molding step is executed under a pressure between 120 and 500 MPa.

14. An electrode for a vacuum interrupter having a disc-like electrical contact, a reinforcing member integrally bonded to an opposite surface to an arc generating surface in said electrical contact, and an electrode rod bonded to said reinforcing member, **characterized in that** said electrical contact is constituted by the electrical contact as claimed in claim 1.

15. An electrode for a vacuum interrupter as claimed in claim 14, **characterized in that** said disc-like electrical contact and the reinforcing member have a center hole in a center of the arc generating surface, said electrode rod is inserted to said center hole so as to be bonded to said reinforcing member, and a surface of said electrode rod close to an arc generation is formed lower than said arm generating surface.

16. An electrode for a vacuum interrupter as claimed in claim 14, **characterized in that** said electrode rod has a small-diameter portion in which a diameter of a portion bonded to said reinforcing member is smaller than a diameter of a portion connected to an external portion.

17. A vacuum interrupter provided with a fixed side electrode and a movable side electrode within a vacuum container, **characterized in that** at least one of said fixed side electrode and said movable side electrode is constituted by the electrode as claimed in claim 14.

18. A vacuum circuit-breaker having a vacuum interrupter provided with a fixed side electrode and a movable side electrode within a vacuum container, a conductor terminal connecting each of said fixed side electrode and said movable side electrode within said vacuum container to various electrical equipment in an outer side of said vacuum interrupter, and an opening and closing means driving said movable side electrode, **characterized in that** said vacuum interrupter is constituted by the vacuum interrupter as claimed in claim 17.

19. A switchgear for a pad mount transformer, having an outer vacuum container, a plurality of vacuum interrupters including a fixed side electrode and a movable side electrode provided within said vacuum container, a flexible conductor electrically connecting said plurality of vacuum interrupters to each other, an insulation tube fixing said fixed side electrode to said outer vacuum c in an insulative manner, and a bellows movably fixing said movable electrode to said outer vacuum container, **characterized in that** said vacuum interrupter is constituted by the vacuum interrupter as claimed in claim 17.
